# EUROPÄISCHE PATENTSCHRIFT

(11) **EP 2 128 560 B1**
(45) Veröffentlichungstag und Bekanntmachung des Hinweises auf die Patenterteilung: **01.07.2015**
(21) Anmeldenummer: 08104145.1
(22) Anmeldetag: 28.05.2008
(51) Int. Cl.: G01B 9/02, G01B 11/02, G01S 17/32

(54) **Interferometrisches Distanzmessverfahren mit spektral trennbarem Doppelchirp und ebensolche Vorrichtung**
Interferometric distance measuring method with spectrally separable double chirp and device
Procédé de mesure de distance interférométrique doté d'une double puce spectrale séparable et dispositif correspondant

(43) Veröffentlichungstag der Anmeldung: 02.12.2009
(73) Patentinhaber: Leica Geosystems AG, 9435 Heerbrugg (CH)
(72) Erfinder: Jensen, Thomas, CH-9400 Rorschach (CH); Rohner, Marcel, CH-9410 Heiden (CH)
(74) Vertreter: Harmann, Bernd-Günther

(56) Entgegenhaltungen:
- US-A1- 2006 126 073
- US-A1- 2006 182 383
- US-A1- 2007 189 341
- RIBUN ONODERA, YUKIHIRO ISHII: "Two-wavelength laser-diode heterodyne interferometer with one phasemeter" OPTICS LETTERS, Bd. 20, Nr. 24, 15. Dezember 1995 (1995-12-15), Seiten 2502-2504, XP002499131
- L. HARTMANN, K. MEINERS-HAGEN, A. ABOU-ZEID: "An absolute distance interferometer with two external cavity diode lasers" MEASUREMENT SCIENCE AND TECHNOLOGY, Bd. 19, 4. März 2008 (2008-03-04), Seiten 1-6, XP002499132 doi:10.1088/0957-0233/19/4/045307

## Beschreibung

Die Erfindung betrifft ein interferometrisches Distanzmessverfahren mit spektral trennbarem Doppelchirp nach dem Oberbegriff des Anspruchs 1 und eine interferometrische Distanzmessvorrichtung nach dem Oberbegriff des Anspruchs 7.

Im Bereich der elektronischen Distanzmessung sind verschiedene Prinzipien und Verfahren bekannt. Ein Ansatz besteht darin, frequenzmodulierte elektromagnetische Strahlung, wie z.B. Licht, auf das zu vermessende Ziel auszusenden und nachfolgend ein oder mehrere Echos von rückstreuenden Objekten, idealerweise ausschliesslich vom zu vermessenden Ziel, zu empfangen, wobei das zu vermessende Ziel sowohl spiegelnde - beispielsweise Retroreflektoren - als auch diffuse Rückstreucharakteristik aufweisen kann.

Nach dem Empfang wird das ggf. überlagerte Echosignal mit einem Mischsignal überlagert und dadurch die zu analysierende Frequenz des Signals vermindert, so dass vorrichtungsseitig nur ein geringerer Aufwand notwendig ist. Das Mischen kann dabei entweder als homodynes Verfahren mit dem gesendeten Signal oder als heterodynes Verfahren mit einem periodischen, insbesondere harmonischen, Signal bekannter Periode erfolgen. Somit unterscheiden sich die Verfahren darin, dass mit dem Sendesignal selbst oder mit einem harmonischen Signal mit einer eigenen Frequenz gemischt wird. Die Mischung dient dazu, das empfangene Signal zu tieferen Frequenzen zu transformieren und zu verstärken. Nachfolgend werden aus dem resultierenden Signal die Laufzeiten und damit - bei bekannter Ausbreitungsgeschwindigkeit der verwendeten Strahlung - die Distanzen zu den zu vermessenden Zielen bestimmt. In einer Heterodyn-Interferometer-Anordnung wird eine durchstimmbare Laserlichtquelle zur Absolutdistanzmessung verwendet. In der prinzipiell einfachsten Ausführungsform erfolgt dabei das Durchstimmen der optischen Frequenz der Laserquelle linear. Das empfangene Signal wird mit einem zweiten Signal, welches vom emittierten Lichtsignal abgeleitet wird, überlagert. Die entstehende Schwebungsfrequenz des heterodynen Mischprodukts, dem Interferogramm, ist ein Mass für die Distanz zum Zielobjekt. Die zur Umsetzung dieser Verfahren verwendeten Vorrichtungen nutzen üblicherweise einen Signalgenerator als Chirp-Generator, der einer modulierbaren Strahlungsquelle ein Signal aufprägt. Im optischen Bereich werden als Strahlungsquellen zumeist Laser eingesetzt, welche durch Modulation der externen (beispielsweise Bragg-Grating) oder internen Kavität (beispielsweise Distributed Feedback (DFB) oder Distributed Bragg Reflector (DBR)) gechirpt werden können. Zur Emission und zum Empfang kommen im optischen Bereich Sende- und Empfangsoptiken zum Einsatz, denen ein Detektor oder Quadraturdetektor zur Heterodynmischung, A/D-Wandler und digitalem Signal-Prozessor nachgeschaltet ist.

Ein Beispiel für ein optisches, kohärentes FMCW-Abstandsmessverfahren wird in der US 4,830,486 beschrieben, wobei diese Verfahren bei kurzer Messzeit eine Genauigkeit im Bereich von Phasenmessverfahren aufweist. Dabei erzeugt ein Chirpgenerator ein linear frequenzmoduliertes Signal, das in ein Mess- und lokales Oszillatorsignal aufgeteilt wird, wobei beide Signale in einem Empfänger überlagert werden.

Die Änderung der Wellenlänge des emittierten Lichtsignals stellt den Massstab der Messung dar. Dieser ist im allgemeinen nicht bekannt und muss daher in einer zusätzlichen Messung bestimmt werden. Hierzu wird im Stand der Technik beispielsweise ein Teil des emittierten Lichts über ein Referenzinterferometer mit definierter Referenzlänge geführt. Aus dem entstehenden Schwebungsprodukt kann auf Grund der bekannten Referenzlänge auf die zeitliche Wellenlängenänderung des emittierten Lichtsignals geschlossen werden. Ist die Referenzlänge nicht bekannt oder instabil, z.B. aufgrund von Temperatureinflüssen, so kann diese über eine zusätzliche Kalibriereinheit, bspw. eine Gaszelle oder ein Fabry-Perot-Element, bestimmt werden.

Aus der EP 1 696 201 ist ein solches Distanzmessverfahren mit einem Aussenden frequenzmodulierter elektromagnetischer Strahlung auf wenigstens ein zu vermessendes Ziel und nachfolgendem Empfang unter heterodynem Mischen der vom Ziel zurückgestreuten Strahlung bekannt, wobei die Strahlung parallel über eine interferometrische Referenzlänge geführt wird.

Während ein ruhendes Ziel eine definierte, zeitlich unveränderliche Distanz aufweist, bereiten sich bewegende oder vibrierende Ziele einige Probleme. Eine konstante Bewegung des Ziels führt dabei beim Durchstimmen zu entgegengesetzten Dopplerverschiebungen für die unterschiedlichen Richtungen der Frequenzrampe. So führt eine Bewegung beispielsweise zu einer positiven Dopplerverschiebung beim Durchlaufen einer ansteigenden Frequenzrampe wohingegen in diesem Fall beim Durchlaufen der abfallenden Rampe eine negative Dopplerverschiebung bewirkt wird. Durch die Verwendung von aufeinanderfolgenden ansteigenden und abfallenden Rampen kann dieser Effekt kompensiert werden.

Allerdings reduziert die Verwendung von zeitlich aufeinanderfolgenden Rampen, d.h. unterschiedlicher bzw. gegenläufiger Chirps der Laserstrahlung, auch die nutzbare Messrate um den Faktor Zwei, beispielsweise von 1 kHz auf 500 Hz, d.h. auf die Hälfte. Zudem basiert dieser Ansatz darauf, dass während der Durchlaufzeit für die zwei Rampen eine konstante Zielgeschwindigkeit gegeben ist. Beschleunigungen des Ziels während des Messvorgangs oder Vibrationen verursachen Fehler in der gemessenen Distanz.

Um diese Problematik zu beseitigen, wird in der US 7,139,446 vorgeschlagen, zwei zeitgleiche und gegenläufige Frequenzrampen zu verwenden, d.h. Strahlung mit zwei Strahlungsanteilen mit gegenläufigem Chirp zu emittieren, was auch eine Verringerung der Meßrate vermeidet. Um diese Strahlungsanteile meßtechnisch separieren zu können, erfolgt deren Emission und Detektion mit unterschiedlicher Polarisation. Durch diesen Ansatz können Beschleunigungen erfaßt und Vibrationen eliminiert werden. Die Trennung der beiden Strahlungsanteile durch die unterschiedliche Polarisation setzt jedoch voraus, dass innerhalb des Aufbaus ein Erhalt der Polarisation gewährleistet wird. Ein Aufbau unter Verwendung von Faseroptik benötigt deshalb polarisationserhaltende Fasern und ist anfällig für Fehler in der gegenseitigen Ausrichtung der Fasern zueinander bzw. der Gestaltung der Verbindungen. Zudem beruht dieser Ansatz darauf, dass auch das Ziel polarisationserhaltende Eigenschaften aufweist, d.h. durch das Ziel keinerlei Einflüsse auf die Polarisation erfolgen. Zu Erzeugung der beiden Strahlungsanteile werden zwei in orthogonalen Polarisationen eingekoppelte Laserquellen und zwei in orthogonalen Polarisationen ausgerichtete Detektoren verwendet.

Auch in R. Onodera et al. "Two-wavelength laser-diode heterodyne interferometry with one phasemeter", Optics Letters Vol. 20, No. 24 (1995) werden gegenläufig vestimmte Laser und eine Trennung nach Polarisation verwendet, wohingegen in der US 2007/0189341 eine elekronische Trennung der unterschiedlichen ModulationsFrequenzen stattfindet.

Die Verwendung von polarisiertem Lichte bringt jedoch Nachteile bei Messungen auf metallische Oberflächen mit sich. Metallische Oberflächen mit einer Mikrorauhigkeit, wie sie bei technischen Oberflächen üblich ist, führen bei schrägem Lichteinfall zu einer Depolarisation. Dieses wurde im Stand der Technik sowohl experimentell, vgl. bspw. K. A. O'Donnell und E.R. Mendez, "Experimental study of scattering from characterized random surfaces", J. Opt. Soc. Am. A/Vol. 4, No. 7, Juli 1987, Seiten 1194 - 1205 oder Gareth D. Lewis et al., "Backscatter linear and circular polarization analysis of roughened aluminum", Applied Optics, Vol. 37, No. 25, September 1998, Seiten 5985 - 5992 und theoretisch in Simulationen, vgl. bspw. E. R. Mendez et al., "Statistics of the polarization properties of one-dimensional randomly rough surfaces", J. Opt. Soc. Am. A, Vol. 12, No. 11, November 1995, Seiten 2507 - 2516 und G. Soriano und M. Saillard, "Scattering of electromagnetic waves from two-dimensional rough surfaces with an impedance approximation", J. Opt. Soc. Am. A, Vol. 18, No. 1, Januar 2001, Seiten 124 - 133, ausführlich untersucht, so dass eine deutliche Einschränkung der Anwendbarkeit des in US 7,139,446 beschriebenen Verfahrens resultiert.

Damit ist die Einsetzbarkeit von interferometrischen Distanzmessverfahren des Stands der Technik mit hohen Messraten, die zudem geeignet sind, vibrierende oder sich bewegende Ziele zu vermessen, für metallische Oberfläche nicht oder nur unter einschränkenden Bedingungen gegeben.

Der Erfindung liegt daher die Aufgabe zugrunde, ein verbessertes Distanzmessverfahren mit doppeltem Chirp bzw. eine solche Vorrichtung bereitzustellen.

Eine weitere Aufgabe der Erfindung besteht darin, eine entsprechende Distanzmessvorrichtung mit vereinfachtem und robusterem Aufbau bereitzustellen, ohne Verwendung von polarisationserhaltenden Fasern.

Eine weitere Aufgabe der Erfindung besteht darin, eine Lösung bereitzustellen, die präzise Distanzmessungen mit Verfahren mit doppeltem Chirp auch auf metallische Oberflächen erlaubt bzw. polarisationsbedingte Fehlereinflüsse vermeidet oder verringert.

Diese Aufgaben werden durch die Gegenstände des Anspruchs 1 bzw. 7 oder der abhängigen Ansprüche gelöst bzw. die Lösungen weitergebildet.

Die erfindungsgemässe Lösung basiert auf einer interferometrischen Distanzmessanordnung, wie z.B. der in der EP 1 696 201 geoffenbarten Heterodyn-Interferometer-Anordnung. Erfindungsgemäss wird eine Unterscheidbarkeit der beiden Frequenzverläufe durch eine spektrale Trennung bewirkt, wobei diese auf einer chromatischen Filterung der unterschiedlichen absoluten optischen Frequenzen bzw. Wellenlängen der gechirpten Laserquellen vor bzw. bei der Detektion beruht. Ein nichterfindungsgemäßes Beispiel ist die Verwendung eines Modulators (optische Frequenzanhebung) durch eine elektrische Filterung der unterschiedlichen Schwebungsfrequenzen der auf- und ab-chirpenden Laserquellen im detektierten Signal.

Bei der chromatischen Filterung weist die generierte Strahlung zwei Strahlungsanteile mit unterschiedlichen absoluten optischen Frequenzen bzw. Wellenlängen auf, die so gewählt werden, dass eine empfangsseitige Separierung möglich ist. Eine Ausführungsform verwendet zur Erzeugung dieser Strahlungsanteile zwei separate und gegenläufig durchstimmbare Laserquellen, z.B. Distributed-Feedback-Laserdioden, mit unterschiedlicher mittlerer Wellenlänge bzw. Frequenz, z.B. 1530 nm und 1540 nm, auf die mit gegenläufigen Frequenzrampen zur Erzeugung eines doppelten Chirps moduliert werden. Die Strahlung dieser Laserquellen ist somit chromatisch filterbar. Eine entsprechende Distanzmessvorrichtung kann mit Standard-Single-Mode-Fasern aufgebaut werden, wobei im Gegensatz zu Geräten des Stands der Technik eine Polarisationserhaltung nicht notwendig ist. Da eine Trennung der Strahlungsanteile chromatisch möglich ist, z.B. durch einen chromatischen Strahlteiler oder optisches Filtern mit zwei getrennte Detektoren oder mit zwei spektral selektiven Detektoren, wirkt sich das polarisationsverändernde Verhalten von metallischen Zieloberflächen nicht auf die Messungen aus, so dass eine ungestörte Eliminierung von Vibrationseinflüssen möglich ist. Für beide Laserquellen kann, wie auch in der EP 1 696 201 beschrieben, ein Referenzinterferogramm aufgenommen werden.

Die nicht erfindungsgemäße elektrische Filterung kann analog oder digital ausgeführt werden. Bei der analogen elektrischen Filterung werden z.B. Hoch- und Tiefpassfilter zur spektralen Trennung der auf- und ab-chirpenden Signale verwendet. Bei der digitalen elektrischen Filterung erfolg die spektrale Trennung der unterschiedlichen Schwebungsfrequenzen durch geeignete digitale Filter, die sich hardwaremäßig in ASIC-oder FPGA-Komponenten integrieren lassen oder softwaremäßig im Signalprozessing implementieren lassen. Bei der elektrischen Filterung wird im Frequenzspektrum des detektierten Signals durch Diskrimination positiver und negativer Signalfrequenzen, relativ zur Modulationsfrequenz betrachtet, eine spektrale Trennung der Signale von den beiden Laserquellen erreicht. Eine chromatische Filterung der Lasersignale wird auf diese Weise nicht benötigt. Dieses Verfahren erlaubt insbesondere die Verwendung nahe beieinander liegenden Wellenlängen, so dass die zentralen Trägerwellenlängen der Laserquellen auch gleich sein können. Insbesondere ist es auch möglich, einen überlappenden Bereich der Durchstimmungs-Kurven zu realisieren, welcher es erlaubt, die Wellenlängen der beiden optischen Quellen relativ zueinander abzugleichen. Zur Detektion reicht in diesem Fall ein einzelner Detektor.

Für beide Umsetzungsformen der Signaltrennung, d.h. sowohl chromatische als auch elektrische Filterung, kann bei der Detektion auch ein sogenannter Quadraturdetektor entweder im elektrischen oder im optischen zur einfachen Phasenbestimmung verwendet werden.

Das erfindungsgemässe Distanzmessverfahren bzw. die erfindungsgemässe Distanzmessvorrichtung werden nachfolgend anhand von in der Zeichnung schematisch dargestellten Ausführungsbeispielen rein beispielhaft näher beschrieben oder erläutert. Im einzelnen zeigen
- Fig.1: die schematische Darstellung der zeitlichen Abhängigkeit der Wellenlänge für interferometrische Distanzmessverfahren;
- Fig.2: die schematische Darstellung der zeitlichen Abhängigkeit der Wellenlänge für interferometrische Distanzmessverfahren mit gegenläufigem Chirp;
- Fig.3a-b: die schematische Darstellung einer ersten Ausführungsform der erfindungsgemässen Distanzmessvorrichtung;
- Fig.4: die schematische Darstellung einer zweiten Ausführungsform der erfindungsgemässen Distanzmessvorrichtung und
- Fig.5: die Darstellung einer komponentenseitigen Realisierungsmöglichkeit für die zweite Ausführungsform.

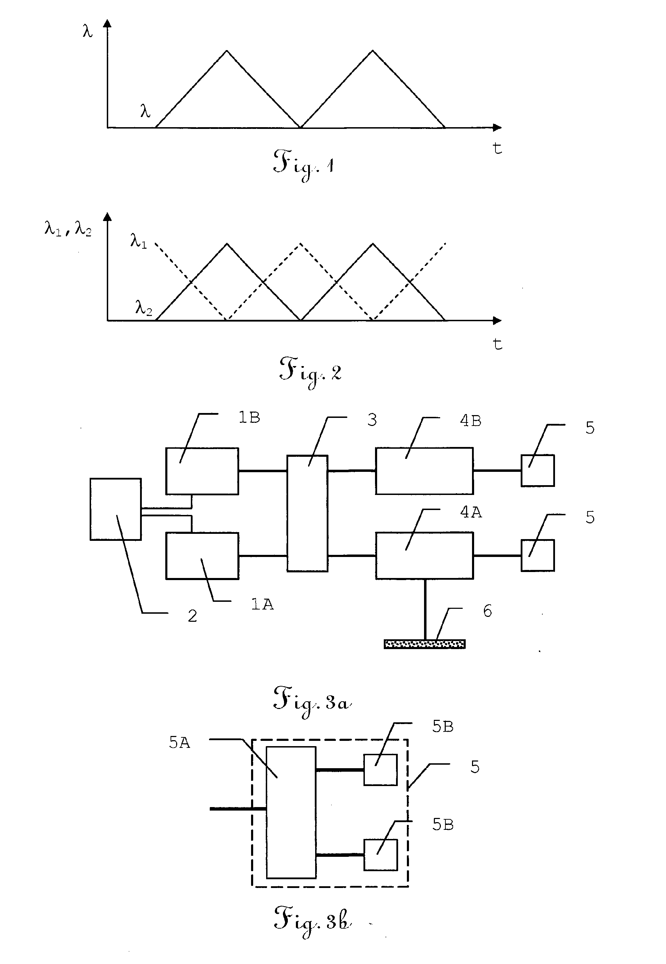

Fig.1 erläutert in schematischer Darstellung die zeitliche Abhängigkeit der Wellenlänge für interferometrische Distanzmessverfahren. Die von dem Distanzmesser emittierte Strahlung wird durch einen Signalgenerator frequenzmoduliert, so dass ansteigende und abfallende Rampen im zeitlichen Verlauf der Wellenlänge λ entstehen. Diese Modulations- bzw. Emissionsform des Stands der Technik erzeugt jedoch ansteigende und abfallende Rampe mit einer zeitlichen Trennung, d.h. in sequentieller Folge, so dass die Messraten halbiert werden und Veränderungen innerhalb der Zeitskala eines Rampenverlaufs bzw. mit entsprechenden Periodizitäten zu Fehlern führen können.

Im Stand der Technik wird daher für interferometrische Distanzmessverfahren die in Fig.2 schematische dargestellte zeitliche Abhängigkeit der modulierten Wellenlängen λ₁, λ₂ mit gegenläufigem Chirp vorgeschlagen. Die auf ein Ziel emittierte Strahlung weist somit zwei Strahlungsanteile mit unterschiedlichen zeitlichen Variationen der Wellenlänge, d.h. gegenläufigen Frequenzrampen, auf. Die Strahlungsanteile können dabei insbesondere mit einem Phasenversatz des gegenläufigen Chirps von exakt 180°, also streng gegenphasig, ausgesendet werden. Die Modulationstiefe der Strahlungsanteile kann unterschiedlich sein, insbesondere ist es auch möglich, eine Quelle nicht zu modulieren - entsprechend der Kombination des Frequenzmodulationsverfahrens mit einem klassischen inkrementellen Interferometer.

Werden beide Strahlungsanteile über eine gemeinsame Optik auf ein gemeinsames Ziel emittiert bzw. durch diese empfangen, so muss empfängerseitig zur Auswertung der beiden Strahlungsanteile eine Trennung ermöglicht werden, was im Stand der Technik durch eine unterschiedliche Polarisation gelöst wird. Erfindungsgemäss werden die Strahlungsanteile beim Empfangen und/oder Auswerten bzw. Bestimmen der Distanz anhand ihrer spektralen Charakteristik getrennt.

Eine erste Ausführungsform des erfindungsgemässen Distanzmessers wird in den Fig.3a-b schematisch dargestellt. Die Distanzmessvorrichtung weist eine Laserquelle zur Emission mit wenigstens zwei unterschiedlichen mittleren Trägerwellenlängen auf, die in der ersten Ausführungsform mit zwei modulierbaren Strahlquellen 1A und 1B zur Erzeugung und zur Emission von gechirpter Laserstrahlung auf ein zu vermessendes Ziel 6 auf, wobei ein Signalgenerator 2 den beiden Strahlquellen 1A und 1B zwei gegenläufige Chirps aufprägt. Grundsätzlich können die beiden Strahlungsanteile der zu emittierenden Laserstrahlung jedoch auch unter Verwendung einer einzigen Quelle erzeugt werden, z.B. wenn eine nachfolgende spektrale Trennung oder eine nachgeschaltete Erzeugung der beiden Strahlungsanteile, z.B. durch einen optisch parametrischen Oszillator, stattfindet. Als Trägerwellenlängen können beispielsweise 1530 nm und 1540 nm gewählt werden. Ebenso kann für beide Strahlquellen 1A und 1B sowohl ein gemeinsamer Signalgenerator 2 als auch ein jeweils einer der Laserquellen alleinig zugeordneter Signalgenerator verwendet werden.

Die so erzeugte Laserstrahlung wird über einen Faserkoppler 3 oder Multiplexer sowohl in ein Messinterferometer 4A als auch in ein Referenzinterferometer 4B mit einer definierten Referenzlänge eingekoppelt, wobei beide Interferometer beispielsweise als Mach-Zehnder-Interferometer aufgebaut sein können. Die Interferometer weisen jeweils einen Detektor 5 zum Empfang der von dem Ziel 6 zurückgestreuten bzw. über den lokalen Oszillator geführten Laserstrahlung auf. Das Referenzinterferometer in z.B. Etalon- oder Mach-Zehnder-Konfiguration dient der Berücksichtigung bzw. Kompensation von Nichtlinearitäten im Durchstimmverhalten der Laserquelle. Ist das Verhalten der Laserquelle ausreichend linear oder bekannt und stabil kann im Prinzip auch auf das Referenzinterferometer verzichtet werden.

Dieses ist jedoch in der Regel nicht der Fall. Zusätzlich zum Referenzinterferometer kann auch noch eine hier nicht dargestellte Kalibriereinheit, insbesondere als Gaszelle oder Fabry-Perot-Element, integriert werden, um die Länge des Referenzinterferometers zu bestimmen. Die Verwendung einer solchen Kalibrierkomponente ist beispielsweise aus der EP 1 696 201 bekannt.

Ebenso können Mess- und Referenzinterferometer auch in Common-Path-Geometrie ausgebildet sein, also einen teilweise gemeinsamen Interferometer-Strahlgang für Mess- bzw. Referenzarm und lokalen Oszillatorarm aufweisen. Für das Messinterferometer wird hierbei der lokale Oszillatorarm durch einen Reflex an der optischen Austrittsfläche definiert, so dass eine konstante, insbesondere bekannte Distanz festgelegt ist, wobei weitere Rückreflektionen vermieden werden. Der Messarm des Messinterferometers wird hingegen durch die Reflektion am zu vermessenden Ziel 6 definiert. Das rückreflektierte Licht von Mess- und lokalem Oszillatorarm wird in dieser Alternative schliesslich auf einen gemeinsamen Detektor geführt.

Der Aufbau einer Ausführungsform des Detektors 5 ist in Fig.3b näher dargestellt. Neben der grundsätzlich möglichen Verwendung chromatisch selektiver Detektoren wird eine Trennung der Laserstrahlung erfindungsgemäß durch ein dielektrisches oder dispersives Element 5A zur chromatischen Filterung der zurückgestreuten Laserstrahlung erreicht, wobei die Strahlungsanteile nach der Trennung auf die Detektoreinheiten 5B geführt werden. Die Signalauswertung kann nachfolgend beispielsweise anhand eines heterodynen interferometrischen Mischverfahrens durchgeführt werden, wobei ein entsprechender Mischer vorgesehen ist oder aber die Detektoreinheiten 5B als solche ausgebildet sind. Die Laserquelle und die Wahl der Trägerwellenlängen erfolgt in Abhängigkeit von der Trennbarkeit und den detektorseitig verwendbaren Komponenten, so dass der chromatische Abstand der beiden Laser entsprechend der Trennbarkeit in der Detektion angepasst ist, was z.B. durch einen chromatischen Abstand von 20 nm gegeben ist.

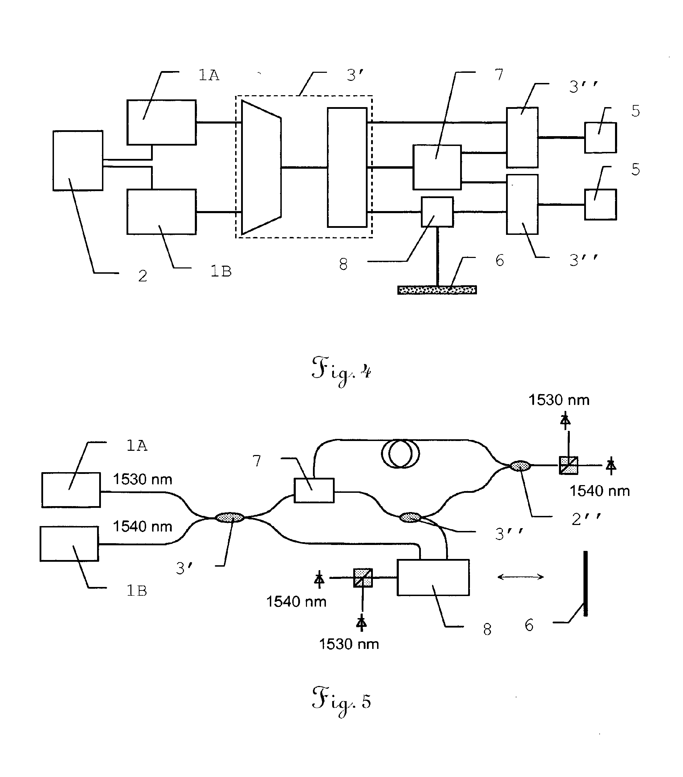

Eine zweite Ausführungsform des erfindungsgemässen Distanzmessers wird in Fig.4 in schematischer Darstellung gezeigt. Diese Ausführungsform entspricht im grundsätzlichen Konzept der ersten Ausführungsform, weist aber einen akusto-optischen Modulator 7 zur Anhebung des lokalen Oszillators der beiden Interferometer um die Modulationsfrequenz des Modulators 7 auf, z.B. 50 MHz, was die Detektierbarkeit erleichtert. Die Aufteilung der Strahlung erfolgt deshalb über einen zweiteilige Faserkoppler 3' auf insgesamt drei Ausgänge für die beiden Interferometer und den Modulator 7. Am Ausgang der Interferometer erfolgt vor der Detektion wiederum eine Zusammenführung durch Faserkoppler 3'', deren Ausgang jeweils mit dem Detektor 5 verbunden ist.

Für diese zweite Ausführungsform ist im Messinterferometer die zum Aussenden und Empfangen der Laserstrahlung auf ein Ziel 6 verwendete Optik 8 schematisch dargestellt.

In Fig.5 erfolgt die Darstellung einer Realisierungsmöglichkeit der optischen Komponenten für die zweite Ausführungsform. Die Laserstrahlung wird durch zwei DFB-Laserdioden als Strahlquellen 1A und 1B mit Trägerwellenlängen von 1530 nm und 1540 nm erzeugt, wobei die Verbindungen zwischen den optischen Komponenten als Single-Mode-Fasern ausgebildet sind. Die erzeugte Laserstrahlung wird in das Messinterferometer, das Referenzinterferometer und den akusto-optischen Modulator 7 eingekoppelt. Die Optik 8 ist als Teleskop mit einem zumindest teilweise gemeinsamen Sende- und Empfangsstrahlgang ausgebildet, wobei das zu vermessende Ziel 6 während der Messung Bestandteil des Messinterferometers ist. Über die optischen Strecken werden die Signale an die Detektoren mit den Detektoreinheiten für die Trägerwellenlängen bei 1530 nm und 1540 nm weitergeleitet. Die Detektorsignale werden dann über elektrische Leitungen zu einem Signalprozessor geführt. Der Signalprozessor übernimmt die Verarbeitung und Auswertung der Signale und steuert ggf. als Signalgenerator über Steuerleitungen die beiden Strahlquellen.

In einer nicht erfindungsgemäßen Ausführungsform, die im Prinzip des Aufbaus der Darstellung in Fig. 4 gleicht, wird die Frequenzanhebung des lokalen Oszillators um z. B. 50 MHz ausgenutzt, um im Frequenzspektrum des Signals eine spektrale Trennung der gegenläufigen Chirp-Signale durch eine elektrische Filterung zu erreichen. Die auf- und ab-chirpenden Signale erscheinen je nach Richtung links bzw. rechts von der zentralen Modulationsfrequenz. Durch eine analoge oder digitale elektrische Frequenzfilterung lassen sich die Signale leicht trennen und können anschließend wie zwei separate Detektorsignale weiterverarbeitet werden. Die elektrische Filterung der Chirps im Frequenzspektrum kann also z.B. digital und softwaremäßig in der Signalverarbeitung erfolgen oder durch eine analoge Filterung der elektrischen Detektorsignale. Da die Frequenz im Spektrum durch die Chirprate aber nicht durch die Trägerwellenlänge der beiden Laserquellen bestimmt ist, können die zentralen Trägerwellenlängen λ₁ und λ₂ auch gleich sein. Auch in dieser Ausführungsform kann auf Polarisationsfasern vollständig verzichtet werden. Zur Detektion genügt eine normale PIN-Diode, wobei eine chromatische Filterung der Detektion wie in Fig.5 nicht notwendig ist.

## Patentansprüche

1. Distanzmessverfahren mit den Schritten
• Aussenden von gechirpter Laserstrahlung mit zwei trennbaren Strahlungsanteilen auf wenigstens ein zu vermessendes Ziel (6) und einen lokalen Oszillatorarm,
wobei die Strahlungsanteile einen gegenläufigen Chirp aufweisen,
• Empfangen der vom Ziel (6) zurückgestreuten und über den lokalen Oszillatorarm geführten Laserstrahlung und Bestimmen wenigstens einer Distanz zu dem wenigstens einen Ziel aus den Signalen basierend auf interferometrischem Mischen,
**dadurch gekennzeichnet, dass**
• die Strahlungsanteile beim Empfangen anhand ihrer spektralen Charakteristik mittels eines dielektrischen oder dispersiven Elements (5A) chromatisch getrennt werden und die Strahlungsanteile nach der Trennung auf eine Detektoreinheit (5B) geführt werden und
• die Laserstrahlung zumindest teilweise mittels einer polarisationserhaltungsfreien Single-Mode-Faser geführt wird.

2. Distanzmessverfahren nach Anspruch 1,
**dadurch gekennzeichnet, dass**
die Strahlungsanteile mit einem Phasenversatz des gegenläufigen Chirps von 180° ausgesendet werden.

3. Distanzmessverfahren nach Anspruch 1 oder 2,
**dadurch gekennzeichnet, dass**
die Strahlungsanteile unterschiedliche Modulationstiefen aufweisen.

4. Distanzmessverfahren nach einem der vorangehenden Ansprüche,
**dadurch gekennzeichnet, dass**
durch einen akusto-optischen Modulator (7) eine Anhebung des lokalen Oszillatorarms des Messinterferometers (4A) um eine Modulationsfrequenz des Modulators (7) erfolgt.

5. Distanzmessverfahren nach einem der vorangehenden Ansprüche,
**dadurch gekennzeichnet, dass**
die Strahlungsanteile mit unterschiedlichen mittleren Trägerwellenlängen ausgesendet werden.

6. Distanzmessverfahren nach einem der vorangehenden Ansprüche,
**dadurch gekennzeichnet, dass**
beim Bestimmen der wenigstens einen Distanz ein Referenzinterferometer zur Berücksichtigung oder Kompensation von Nichtlinearitäten beim Erzeugen des Chirps dient.

7. Distanzmessvorrichtung zur Durchführung des Verfahrens nach einem der Ansprüche 1 bis 6 mit wenigstens
• einer modulierbaren Laserquelle zur Erzeugung und zur Emission von Laserstrahlung mit zwei trennbaren Strahlungsanteilen auf ein zu vermessendes Ziel (6),
• einem Signalgenerator (2) zur Modulation der Laserquelle der Strahlungsanteile mit zwei gegenläufigen Chirps,
• einem Empfänger mit
- einem Messinterferometer (4A) bestehend aus einem Messarm und einem lokalen Oszillatorarm mit wenigstens einem Detektor (5) zum Empfang der von einem Ziel (6) zurückgestreuten Laserstrahlung,
- einem Mischer zur Durchführung eines heterodynen interferometrischen Mischverfahrens, insbesondere mit einem Referenzinterferometer zur Berücksichtigung oder Kompensation von Nichtlinearitäten beim Erzeugen des Chirps,
**dadurch gekennzeichnet, dass**
• die Strahlungsanteile empfängerseitig anhand ihrer spektralen Charakteristik getrennt werden, wobei der Detektor (5) ein dielektrisches oder dispersives Element (5A) zur chromatischen Trennung der zurückgestreuten Laserstrahlung in die Strahlungsanteile aufweist und die Strahlungsanteile nach der Trennung auf eine Detektoreinheit (5B) geführt werden und
• optische Verbindungen zwischen Komponenten der Distanzmessvorrichtung als polarisationserhaltungsfreie Single-Mode-Fasern ausgebildet sind.

8. Distanzmessvorrichtung nach Anspruch 7,
**gekennzeichnet durch**
einen akusto-optischen Modulator (7) zur Anhebung des lokalen Oszillatorarms des Messinterferometers (4A) um eine Modulationsfrequenz des Modulators (7).

9. Distanzmessvorrichtung nach einem des Ansprüche 7 bis 8,
**dadurch gekennzeichnet, dass**
die Laserquelle zwei Laserdioden (1A) und (1B) mit unterschiedlichen mittleren Trägerwellenlängen aufweist, insbesondere mit Trägerwellenlängen von 1530 nm und 1540 nm.

10. Distanzmessvorrichtung nach einem der Ansprüche 7 bis 9,
**dadurch gekennzeichnet, dass**
der Detektor (5) zwei Detektoreneinheiten (5B) zum spektral getrennten Empfang der Strahlungsanteile aufweist.

## Claims

1. Distance measuring method having the steps of
• emitting chirped laser radiation with two separable radiation components onto at least one target (6) to be measured and onto a local oscillator arm,
the radiation components having an opposite chirp, and
• receiving the laser radiation backscattered by the target (6) and guided via the local oscillator arm, and determining at least one distance to the at least one target from the signals on the basis of interferometric mixing,
**characterized in that**
• upon reception the radiation components are separated chromatically with the aid of their spectral characteristic by means of a dielectric or dispersive element (5A) and, after the separation, the radiation components are guided onto a detector unit (5B), and
• the laser radiation is guided at least partially by means of a not polarization-maintaining single-mode fibre.

2. Distance measuring method according to Claim 1, **characterized in that** the radiation components are emitted with a phase offset of 180° of the opposite chirp.

3. Distance measuring method according to Claim 1 or 2, **characterized in that** the radiation components have different modulation depths.

4. Distance measuring method according to one of the preceding claims, **characterized in that** an acousto-optical modulator (7) is used to boost the local oscillator arm of the measuring interferometer (4A) by a modulation frequency of the modulator (7).

5. Distance measuring method according to one of the preceding claims, **characterized in that** the radiation components are emitted with different average carrier wavelengths.

6. Distance measuring method according to one of the preceding claims, **characterized in that** when the at least one distance is being determined a reference interferometer is used to take into account or compensate nonlinearities in the generation of the chirp.

7. Distance measuring device for carrying out the method according to one of Claims 1 to 6, having at least
• a modulatable laser source for generating and for emitting laser radiation with two separable radiation components onto a target (6) to be measured,
• a signal generator (2) for modulating the laser source of the radiation components with two opposite chirps,
• a receiver having
- a measuring interferometer (4A) comprising a measuring arm and a local oscillator arm with at least one detector (5) for receiving the laser radiation backscattered by a target (6),
- a mixer for carrying out a heterodyne interferometric mixing method, in particular having a reference interferometer in order to take account of or compensate nonlinearities in the generation of the chirp,
**characterized in that**
• the radiation components are separated at the receiver end with the aid of their spectral characteristic, the detector (5) having a dielectric or dispersive element (5A) for chromatically separating the backscattered laser radiation into the radiation components, and, after the separation, the radiation components being guided onto a detector unit (5B), and
• optical connections between components of the distance measuring device are designed as not polarization-maintaining single-mode fibres.

8. Distance measuring device according to Claim 7, **characterized by** an acousto-optical modulator (7) for boosting the local oscillator arm of the measuring interferometer (4A) by a modulation frequency of the modulator (7).

9. Distance measuring device according to either of Claims 7 and 8, **characterized in that** the laser source has two laser diodes (1A) and (1B) with different average carrier wavelengths, in particular with carrier wavelengths of 1530 nm and 1540 nm.

10. Distance measuring device according to one of Claims 7 to 9, **characterized in that** the detector (5) has two detector units (5B) for spectrally separate reception of the radiation components.

## Revendications

1. Procédé de mesure de distance avec les étapes
• émission de rayonnement laser avec chirp avec deux composantes de rayonnement séparables sur au moins une cible à mesurer (6) et un bras d'oscillateur local, cependant que les composantes de rayonnement présentent un chirp opposé,
• réception du rayonnement laser rétrodiffusé par la cible (6) et guidé par le bras d'oscillateur local et détermination d'au moins une distance de la cible qui existe au moins à partir des signaux sur la base d'un mélange interférométrique,
**caractérisé en ce que**
• les composantes de rayonnement sont séparées chromatiquement lors de la réception à l'aide de leur caractéristique spectrale au moyen d'un élément diélectrique ou dispersif (5A) et les composantes de rayonnement sont guidées après la séparation sur une unité de détecteur (5B) et
• le rayonnement laser est guidé au moins partiellement au moyen d'une fibre monomode exempte de maintien de polarisation.

2. Procédé de mesure de distance selon la revendication 1, **caractérisé en ce que** les composantes de rayonnement sont émises avec un décalage de phase de chirp contraire de 180°.

3. Procédé de mesure de distance selon la revendication 1 ou 2, **caractérisé en ce que** les composantes de rayonnement présentent différentes profondeurs de modulation.

4. Procédé de mesure de distance selon l'une des revendications précédentes, **caractérisé en ce qu'**une accentuation du bras d'oscillateur local de l'interféromètre de mesure (4A) est effectuée par un modulateur acousto-optique (7) autour d'une fréquence de modulation du modulateur (7).

5. Procédé de mesure de distance selon l'une des revendications précédentes, **caractérisé en ce que** les composantes de rayonnement sont émises avec différentes longueurs moyennes d'onde porteuse.

6. Procédé de mesure de distance selon l'une des revendications précédentes, **caractérisé en ce que** lors de la détermination de la distance qui existe au moins un interféromètre de référence sert à prendre en compte des non-linéarités ou à les compenser lors de la génération du chirp.

7. Dispositif de mesure de distance pour exécuter le procédé selon l'une des revendications 1 à 6 avec au moins
• une source laser modulable pour produire et émettre un rayonnement laser avec deux composantes de rayonnement séparables sur une cible à mesurer (6),
• un générateur de signaux (2) pour la modulation de la source laser des composantes de rayonnement avec deux chirps contraires,
• un récepteur avec
- un interféromètre de mesure (4A) composé d'un bras de mesure et d'un bras d'oscillateur local avec au moins un détecteur (5) pour recevoir le rayonnement laser rétrodiffusé par une cible (6),
- un mélangeur pour exécuter un procédé de mélange interférométrique hétérodyne, en particulier avec un interféromètre de référence pour prendre en compte des non-linéarités ou à les compenser lors de la génération du chirp,
**caractérisé en ce que**
• les composantes de rayonnement sont séparées côté récepteur à l'aide de leur caractéristique spectrale, cependant que le détecteur (5) présente un élément diélectrique ou dispersif (5A) pour la séparation chromatique du rayonnement laser rétrodiffusé dans les composantes de rayonnement et les composantes de rayonnement sont guidées après la séparation sur une unité de détecteur (5B) et
• des liaisons optiques entre des composants du dispositif de mesure de distance sont configurées comme fibres des fibres monomodes mode exemptes de maintien de polarisation.

8. Dispositif de mesure de distance selon la revendication 7, **caractérisé par** un modulateur acousto-optique (7) pour l'accentuation du bras d'oscillateur local de l'interféromètre de mesure (4A) autour d'une fréquence de modulation du modulateur (7).

9. Dispositif de mesure de distance selon l'une des revendications 7 à 8, **caractérisé en ce que** la source laser présente deux diodes laser (1A) et (1B) avec différentes longueurs moyennes d'onde porteuse, en particulier des longueurs d'onde porteuse de 1530 nm et 1540 nm.

10. Dispositif de mesure de distance selon l'une des revendications 7 à 9, **caractérisé en ce que** le détecteur (5) présente deux unités de détecteur (5B) pour la réception séparée spectralement des composantes de rayonnement.
